Europäisches Patentamt

European Patent Office

Office européen des brevets

(11) Veröffentlichungsnummer: **0 224 015**
**B 1**

(12) **EUROPÄISCHE PATENTSCHRIFT**

(45) Veröffentlichungstag der Patentschrift:
19.04.89

(21) Anmeldenummer: 86114453.3

(22) Anmeldetag: 18.10.86

(51) Int. Cl.⁴: **F41H 1/04, B29C 43/10,**
**B32B 1/10, B29C 43/18**

(54) Verfahren zur Herstellung eines Stahlhelms.

(30) Priorität: 25.11.85 DE 3541571

(43) Veröffentlichungstag der Anmeldung:
03.06.87 Patentblatt 87/23

(45) Bekanntmachung des Hinweises auf die Patenterteilung:
19.04.89 Patentblatt 89/16

(84) Benannte Vertragsstaaten:
AT BE CH DE ES FR GB GR IT LI NL SE

(56) Entgegenhaltungen:
FR-A- 2 550 621
GB-A- 1 319 477
US-A- 2 295 855
US-A- 2 420 522
US-A- 3 001 900
US-A- 4 390 489

(73) Patentinhaber: Schuberth-Werk GmbH & Co. KG,
Rebenring 31, D-3300 Braunschweig(DE)

(72) Erfinder: Zahn, Christian, Am Bülten 40,
D-3300 Braunschweig(DE)

(74) Vertreter: Lins, Edgar, Dipl.-Phys. et al, Patentanwälte
Gramm + Lins Theodor-Heuss-Strasse 2,
D-3300 Braunschweig(DE)

ACTORUM AG

**Beschreibung**

Die Erfindung betrifft ein Verfahren zur Herstellung eines Stahlhelms mit einer Auskleidung der Stahlkalotte aus mit einem thermisch aushärtenden Bindemittel getränkten Gewebelagen, bei dem die Gewebelagen in die Stahlkalotte, die ihrerseits in eine geheizte Form gelegt wird, eingelegt und durch ein allseitiges Anpressen der Gewebelagen gegen die aufgeheizte Stahlkalotte geformt und ausgehärtet werden.

Es hat sich gezeigt, daß Stahlhelme mit normal starken Stahlkalotten eine für viele Anforderungen nicht ausreichende Beschußfestigkeit aufweisen. Es ist daher bekannt, Stahlhelme mit einer Auskleidung zu versehen, die aus einer Vielzahl von Gewebelagen gebildet ist. Die Gewebelagen sind mit einem thermisch aushärtenden Bindemittel getränkt und werden so vorgeformt, daß sie möglichst gut die Form der Innenwand der Stahlkalotte aufweisen. Der Halt der Innenauskleidung in der Stahlkalotte wird entweder durch einen Preßsitz gewährleistet oder durch Druckknöpfe o.ä. In erheblichem Umfange werden Stahlhelme auch mit solchen Auskleidungen nachgerüstet, um nachträglich die Beschußfestigkeit zu erhöhen.

Die bekannte Auskleidung der Stahlhelme führt jedoch zu einem sehr ungleichmäßigen Beschußverhalten über die Oberfläche der Stahlkalotte. Der Grund hierfür liegt darin, daß die Stahlhelmkalotten nicht sehr genau gefertigt werden können, so daß die Stahlhelmkalotten in ihrer Form relativ große Unterschiede aufweisen. Die vorgeformten Auskleidungen liegen daher an der Innenwand der Stahlkalotte mehr oder weniger gut an und bilden teilweise nicht unerhebliche Luft-Zwischenräume, die bis zu 5 mm tief sein können. Die Luft-Zwischenräume verringern jedoch den Effekt der Erhöhung der Beschußfestigkeit durch die Gewebeauskleidung ganz entscheidend. Eine wesentliche Beschußdämpfung wird nur erreicht, wenn die Stahlkalotte und die Auskleidung unmittelbar und fest aneinander anliegen. Dies ist aber über die Innenoberfläche der Stahlkalotte nur partienweise der Fall.

Die relativ aufwendige Auskleidung aus bis zu 20 Lagen aus relativ teueren Aramidfasern führt daher zu sehr unberechenbaren und ungleichmäßigen Ergebnissen.

Das eingangs erwähnte Verfahren ist durch die US-A 2 420 522 bekannt. Danach wird eine Stahlhelmkalotte aufgeheizt und die mit dem Bindemittel versehenen Gewebelagen in die aufgeheizte Form gelegt und mit einem aufblasbaren Stempel gegen die Innenwand der Kalotte gedrückt. Mit diesem Verfahren wird durch die Gewebelagen ein separates Teil gebildet, das in seiner Form gut an die Innenform der Stahlkalotte angepaßt ist. Durch die so hergestellte Innenkalotte soll die Festigkeit und die Stoßdämpfung des Helmes verbessert werden. Eine wesentliche Verbesserung der Beschußfestigkeit läßt sich dadurch nicht erreichen.

Der Erfindung liegt die Aufgabe zugrunde, ein Verfahren der eingangs erwähnten Art zur Herstellung eines Stahlhelmes anzugeben, durch das durch die Gewebeauskleidung eine wesentliche Erhöhung der Beschußfestigkeit erzielt wird.

Diese Aufgabe wird erfindungsgemäß dadurch gelöst, daß die Aufheizung der Stahlkalotte und das Anpressen der Gewebelagen gegen die aufgeheizte Stahlkalotte derart erfolgt, daß eine feste Verbindung der Gewebelagen mit der Stahlkalotte hergestellt wird.

Erfindungsgemäß dient die Stahlkalotte als Form für die Auskleidung aus den mit dem Bindemittel getränkten Gewebelagen, die eine gleichmäßige, innige Verbindung mit der Stahlkalotte über die gesamte Innenoberfläche der Stahlkalotte herstellen, so daß Stahlkalotte und Auskleidung eine feste Verbindung zu einer Gesamtkalotte eingehen. Dadurch wird die gewünschte Beschußdämpfung durch die Gewebelage erheblich verbessert und die bisher mit 20 Gewebelagen erreichten Beschußergebnisse bereits mit 4 bis 6 Gewebelagen erzielt.

Der Andruck der Gewebelagen an die Stahlkalotte erfolgt vorzugsweise durch einen Druckstempel aus einem elastischen Material, beispielsweise einem geeigneten Gummi. Alternativ ist es auch möglich, einen Druckstempel zu verwenden, dessen Form durch ein eingepumptes Fluid, beispielsweise Wasser, Öl oder Luft, veränderbar ist. Dabei ist es möglich, auch den Stempel aufzuheizen, indem beispielsweise ein aufgeheiztes Öl oder ein aufgeheizter Dampf in den Druckstempel geleitet wird, der sich nach Art eines Ballons durch das Fluid allseitig ausdehnt und auf die gesamte Innenoberfläche der Stahlkalotte einen gleichen Druck ausübt.

Das Bindemittel ist vorzugsweise ein thermisch verfestigendes Bindemittel, z.B. ein duroplastischer oder thermoplastischer Kunststoff oder ein unter Wärmeeinwirkung vernetzender Elastomer. Diese Bindemittel sind geeignet, die feste Verbindung bei ihrer Verfestigung mit der Innenoberfläche der Stahlkalotte herzustellen.

Die Erfindung soll im folgenden anhand eines in der Zeichnung dargestellten Ausführungsbeispiels näher erläutert werden. Es zeigen:

Figur 1: eine in eine aufgeheizte Form eingelegte Stahlkalotte mit eingelegten Gewebelagen und einem zur Formung dienenden elastischen Druckstempel;

Figur 2: einen nach dem in Figur 1 dargestellten Verfahren hergestellten Stahlhelm mit einer Gewebeauskleidung.

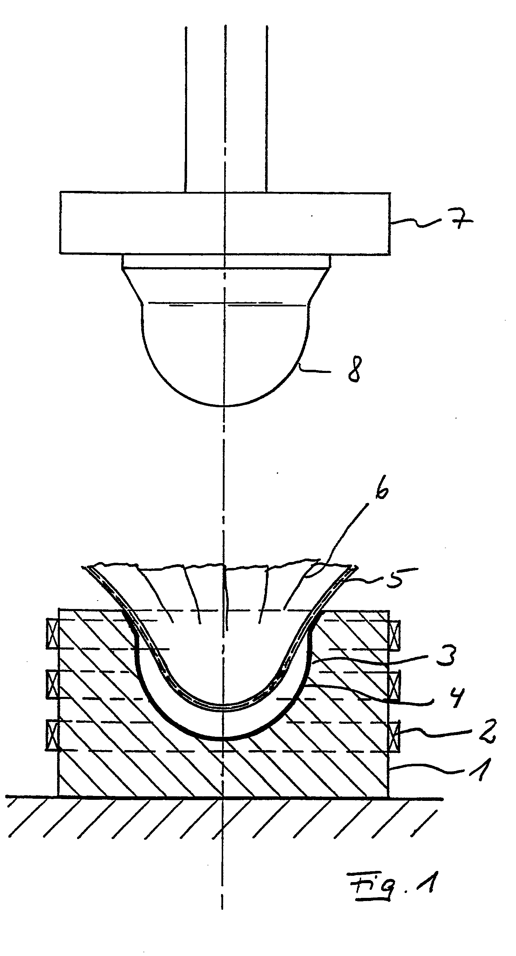

Figur 1 läßt eine Metallform 1 erkennen, die mit Heizbändern 2 umlegt ist und auf diese Weise aufgeheizt werden kann. Die Form 1 weist einen Aufnahmeraum 3 für eine Stahlkalotte 4 eines Stahlhelms auf. Vorzugsweise ist die Stahlkalotte 4 bereits etwa auf die Arbeitstemperatur vorgeheizt, so daß die Form 1 dann nur noch die Aufgabe hat, die Temperatur der Stahlkalotte 4 während des nachfolgenden Vorganges etwa konstant zu halten.

Zur Herstellung einer Auskleidung werden etwa vier bis sechs Gewebelagen 5, die mit einem thermisch verfestigenden Bindemittel getränkt sind, in die Stahlkalotte 4 eingelegt. Um die ebenen Gewebelagen 5 an die Form der Stahlkalotte 4 etwa anpassen zu können, weisen sie an ihrem äußeren Rand senkrecht zum Rand stehende Einschnitte 6 auf, die das Einlegen der Gewebelagen 5 in die Kalotte 4 ermöglichen.

Danach wird ein Druckstempel 7 in die Form 1 verfahren. Der Druckstempel 7 weist einen Kern 8 auf, der etwa die Innenform der Helmkalotte 4 hat, jedoch etwas schmäler und länger ist. Der Kern 8 besteht aus einem wärmefesten, elastischen Gummi. Durch das Einpressen des Druckstempels 7 in die Form 1 drückt das elastische Material des Kerns 8 zur Seite, und die getränkten Gewebelagen werden allseitig und gleichmäßig flächig gegen die innere Oberfläche der Stahlkalotte 4 gepreßt und dabei auf die für das benutzte Bindemittel geeignete Temperatur aufgeheizt. Dadurch verflüssigt sich das beispielsweise durch einen thermoplastischen oder duroplastischen Kunststoff gebildete Bindemittel und verbindet sich mit der Helmkalotte 4, die hier die Eigenschaft einer verlorenen Form für die Formung der durch die Gewebelagen 5 gebildeten Auskleidung ausübt. Nach dem Erkalten ist die Auskleidung durch das Bindemittel der Form der betreffenden Stahlkalotte 4 vollständig und ganzflächig angepaßt, da die betreffende Stahlkalotte 4 als Herstellungsform für die Herstellung der Auskleidung gedient hat.

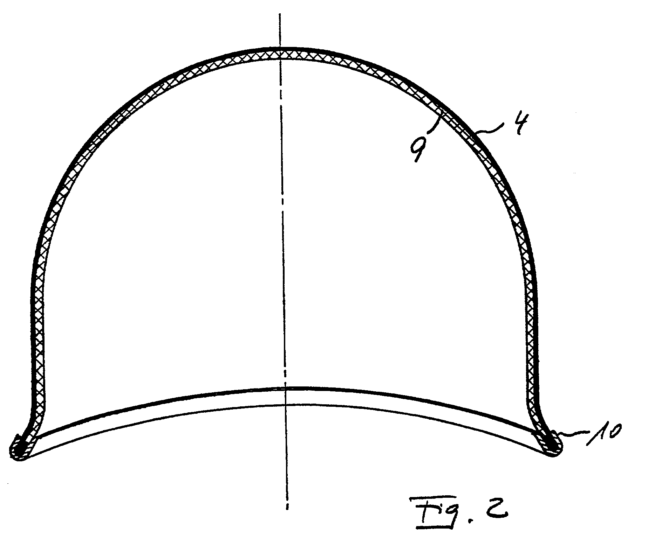

Figur 2 zeigt einen derartigen Stahlhelm 4, der eine aus den Gewebelagen 5 gebildete Auskleidung 9 aufweist, die an jeder Stelle fest mit der Stahlkalotte 4 verbunden ist. Nach der Herstellung der Auskleidung 9 wird diese am Rand der Stahlkalotte 4 abgeschnitten und der gemeinsame Rand der Stahlkalotte 4 und der Auskleidung 9 durch ein Gummiprofil 10 umgriffen.

Der in Figur 2 dargestellte Stahlhelm weist über die gesamte Oberfläche der Stahlkalotte eine völlig gleichmäßige Beschußfestigkeit auf.

Die Gewebelagen 5 sind in an sich bekannter Weise vorzugsweise aus Aramidfasern, Kevlar oder Nylon o.ä., gebildet. Als Bindemittel kommen Thermoplaste, wie Polyurethan- oder Polyäthylenfolien, Duroplaste wie Polyester, Epoxidharze oder Phenol, oder Elastomere (Kautschuk) beispielsweise in Betracht. Wesentlich für die Bindemittel ist ihre Eigenschaft, sich in der durch die Stahlkalotte 4 gebildeten Form zu verfestigen, beispielsweise durch Wärmeeinwirkung, und dabei eine feste Verbindung mit der Stahlkalotte einzugehen.

**Patentansprüche**

1. Verfahren zur Herstellung eines Stahlhelms mit einer Auskleidung (9) der Stahlkalotte (4) aus mit einem thermisch aushärtenden Bindemittel getränkten Gewebelagen (5), bei dem die Gewebelagen (5) in die Stahlkalotte (4), die ihrerseits in eine geheizte Form (1) gelegt wird, eingelegt und durch ein allseitiges Anpressen der Gewebelagen (5) gegen die aufgeheizte Stahlkalotte (4) geformt und ausgehärtet werden, dadurch gekennzeichnet, daß die Aufheizung der Stahlkalotte und das Anpressen der Gewebelagen (5) gegen die aufgeheizte Stahlkalotte (4) derart erfolgt, daß eine feste Verbindung der Gewebelagen (5) mit der Stahlkalotte (4) hergestellt wird.

2. Verfahren nach Anspruch 1, dadurch gekennzeichnet, daß das Anpressen der Gewebelagen (5) an die aufgeheizte Stahlkalotte mit einem Druckstempel (7, 8) aus elastischem Material vorgenommen wird.

3. Verfahren nach Anspruch 2, dadurch gekennzeichnet, daß das Anpressen der Gewebelagen (5) an die aufgeheizte Stahlkalotte (4) mit einem Druckstempel vorgenommen wird, dessen Form durch ein eingepumptes Fluid veränderbar ist.

4. Verfahren nach einem der Ansprüche 1 bis 3, dadurch gekennzeichnet, daß die Stahlkalotte (4) im vorgeheizten Zustand in die geheizte Form (1) eingelegt wird.

**Claims**

1. Method of making a steel helmet with a lining (9) of the steel cap (4) of textile layers (5) impregnated with a thermo-setting binder, in which the textile layers (5) are laid in the steel cap (4) which, for its part is placed in a heated mould (1), and are deformed and hardened by pressing the textile layers (5) on all sides against the heated steel cap (4), characterized in that the heating of the steel cap and the pressing of the textile layers (5) against the heated cap are so effected that a firm bonding of the textile layers (5) to the steel cap (4) is produced.

2. Method according to claim 1, characterized in that the pressing of the textile layers (5) on the heated steel cap (4) is carried out with a stamp (7, 8) of elastic material.

3. Method according to claim 2, characterized in that the pressing of the textile layers (5) on the heated steel cap (4) is carried out with a stamp whose form can be varied by a fluid pumped therein.

4. Method according to one of claims 1 to 3, characterized in that the steel cap (4) is placed in the heated mould (1) in pre-heated state.

**Revendications**

1. Procédé de fabrication d'un casque en acier dont la calotte (4) en acier présente un revêtement (9) de couches de tissu (5) imprégnées d'un liant thermodurcissable, suivant lequel on introduit les couches de tissu (5) dans la calotte (4) qui est, quant à elle, placée dans une forme (1) chauffée, et on les met en forme et on les durcit par pressage de tout côté des couches de tissu (5) contre la calotte (4) chauffée, caractérisé en ce que l'on procède au chauffage de la calotte et au pressage des couches de tissu (5) contre la calotte (4) chauffée de manière à réaliser une liaison solide entre les couches de tissu (5) et la calotte (4).

2. Procédé conforme à la revendication 1, caractérisé en ce que l'on procède au pressage des couches de tissu (5) contre la calotte chauffée au moyen d'un tampon presseur (7, 8) en matériau élastique.

3. Procédé conforme à la revendication 2, caractérisé en ce que l'on procède au pressage des couches de tissu (5) sur la calotte en acier (4) au moyen d'un tampon presseur dont la forme est susceptible d'être modifiée par injection d'un fluide.

4. Procédé conforme à l'une des revendications 1 à 3, caractérisé en ce que la calotte en acier (4) est déposée à l'état préchauffé dans la forme (1) chauffée.

4

Fig. 1

Fig. 2